# EUROPÄISCHE PATENTANMELDUNG

(11) **EP 2 368 675 A1**
(43) Veröffentlichungstag der Anmeldung: **28.09.2011**
(21) Anmeldenummer: 11154006.8
(22) Anmeldetag: 10.02.2011
(51) Int. Cl.: B26D 3/10, B26D 5/08

(54) **Vorrichtung zum Schneiden, Werkzeugmaschine sowie Verfahren**

(30) Priorität: 26.03.2010 DE 202010004242 U
(71) Anmelder: Geiss AG, 96145 Sesslach (DE)
(72) Erfinder: Geiss, Manfred, 96145 Sesslach (DE); Gsänger, Andreas, 96145 Sesslach (DE)
(74) Vertreter: Peckmann, Ralf

(57) **Zusammenfassung**

Die vorliegende Erfindung schafft eine Vorrichtung (1) zum Schneiden, mit: einem Schneidwerkzeug (2), welches zum mechanischen Schneiden von Material (50) ausgebildet ist; und einem Linearmotor (3), mittels welchem das Schneidwerkzeug (2) zum Ausführen einer Schneidbewegung zum Schneiden des Materials (50) antreibbar ist.

## Beschreibung

Die vorliegende Erfindung bezieht sich auf eine Vorrichtung zum Schneiden, auf eine Werkzeugmaschine sowie auf ein Verfahren zum Steuern der Vorrichtung.

Es ist bekannt geworden, beispielsweise dünnes Kunststoffmaterial mit einem mit Ultraschall beaufschlagten Schneidwerkzeug zu scheiden.

Um nun beispielsweise dickeres Kunststoffmaterial oder Honeycomb-Material zu schneiden, werden herkömmlicherweise Schneidwerkzeuge benutzt, welche mittels eines Elektromotors mechanisch angetrieben werden. Ein derartiger Elektromotor ist dabei mit einem derartigen Schneidwerkzeug mittels einer Kurbel gekoppelt, welche die Drehbewegung der Motorwelle in eine Hubbewegung des Schneidwerkzeugs umsetzt.

Bei der letztgenannten Lösung hat es sich als nachteilig herausgestellt, dass der Hub des Schneidwerkzeugs unveränderlich ist. Ferner stellt die Kurbel samt entsprechender Lager eine Komponente dar, die über kurz oder lang verschleißt.

Es ist daher Aufgabe der vorliegenden Erfindung, eine verbesserte Vorrichtung zum Schneiden, eine Werkzeugmaschine mit einer derartigen Vorrichtung sowie ein Verfahren zum Steuern einer derartigen Vorrichtung bereitzustellen, wobei die aus dem Stand der Technik bekannten Nachteile nach Möglichkeit vermieden werden.

Erfindungsgemäß wird diese Aufgabe durch eine Vorrichtung zum Schneiden mit den Merkmalen des Schutzanspruchs 1, durch eine Werkzeugmaschine mit den Merkmalen des Schutzanspruchs 7 sowie durch ein Verfahren mit den Merkmalen des Schutzanspruchs 10 gelöst.

Demgemäß wird eine Vorrichtung zum Schneiden bereitgestellt, welche Folgendes aufweist: ein Schneidwerkzeug, welches zum mechanischen Schneiden von Material ausgebildet ist; und einen Linearmotor, mittels welchem das Schneidwerkzeug zum Ausführen einer Schneidebewegung zum Schneiden des Materials antreibbar ist.

Ferner wird eine Werkzeugmaschine mit der erfindungsgemäßen Vorrichtung bereitgestellt.

Weiterhin wird ein Verfahren zum Steuern der erfindungsgemäßen Vorrichtung bereitgestellt, wobei der Hub, die Geschwindigkeit, die Beschleunigung und/oder die Schnittkraft der Schneidbewegung des Schneidwerkzeugs bedarfsabhängig eingestellt wird.

Die der vorliegenden Erfindung zugrundeliegende Idee besteht darin, dass ein Linearmotor dazu geeignet ist, ein Schneidwerkzeug in einer Schneidbewegung, insbesondere in einer Schneidbewegung, zu führen.

Die Verwendung eines Linearmotors ist in vielfacher Hinsicht vorteilhaft. Insbesondere kann dadurch die Anzahl der bewegten Teile deutlich reduziert werden, was einen Verschleiß minimiert, und der Hub der Schneidwerkzeugs frei eingestellt werden.

In den Unteransprüchen finden sich vorteilhafte Ausgestaltungen und Verbesserungen der Erfindung.

Unter "mechanischem Schneiden" ist vorliegend vorzugsweise jede Art von mechanischem Trennen, also auch beispielsweise Sägen, zu verstehen.

Unter einer "Werkzeugmaschine" ist vorliegend auch ein Roboter zu verstehen.

Gemäß einer bevorzugten Weiterbildung der erfindungsgemäßen Vorrichtung weist der Linearmotor ein stationäres Primärelement und ein relativ zu diesem bewegliches Sekundärelement auf, wobei das Schneidwerkzeug direkt von dem Sekundärelement angetrieben wird. Mit "direkt" ist gemeint, dass keinerlei Getriebe, Unter- oder Übersetzung zwischen dem Sekundärelement und dem Schneidwerkzeug vorgesehen ist. Mit "Primärelement" ist vorliegend das Element gemeint, welches die elektrischen Spulen enthält. Mit "Sekundärelement" ist vorliegend das Element gemeint, welches sich unter Einwirkung des von dem Primärelement erzeugten Magnetfelds bewegt. Diese Weiterbildung ist insofern vorteilhaft, als dass das Primärelement vergleichsweise schwer ist und das Sekundärelement vergleichsweise leicht ist und letzteres sich daher einfacher beschleunigen lässt. Außerdem benötigt das Sekundärteil keine Zuleitungen.

Gemäß einer weiter bevorzugten Weiterbildung der erfindungsgemäßen Vorrichtung weist das Sekundärelement eine Halterung auf, an welcher das Schneidwerkzeug lösbar befestigt ist. Dies erlaubt einen Austausch des Schneidwerkzeugs, beispielsweise wenn dieses verschlissen ist oder wenn eine andere Art von Schneidwerkzeug benötigt wird, weil es ein anderes Material zu schneiden gilt.

Gemäß einer weiter bevorzugten Weiterbildung der erfindungsgemäßen Vorrichtung ist ein erstes Trägerteil vorgesehen, an welchem das Sekundärelement mittels einer Linearführung beweglich befestigt ist. Die Linearführung weist typischerweise zwei Schienen auf, zwischen welchen Wälzlager angeordnet sind. Das erste Trägerteil ist typischerweise als Gehäuse ausgebildet.

Gemäß einer weiter bevorzugten Weiterbildung der erfindungsgemäßen Vorrichtung weist das Sekundärteil ein zweites Trägerteil und wenigstens einen Permanentmagneten auf, welcher in das zweite Trägerteil vorderseitig eingegossen ist, wobei das zweite Trägerteil rückseitig an der Linearführung befestigt ist. Im Gegensatz zu einer Befestigung des zweiten Trägerteils an der Linearführung in seitlichen Bereichen des zweiten Trägerteils lässt sich mittels der beschriebenen Weiterbildung eine Gewichtseinsparung erzielen.

Gemäß einer weiter bevorzugten Weiterbildung der erfindungsgemäßen Vorrichtung ist wenigstens ein Puffer als Endlagenbegrenzung für das Sekundärelement vorgesehen. Der Puffer bremst das Sekundärelement in dem Fall ab, dass eine Steuerung der Bewegung des Sekundärelements ausfällt. Dies kann beispielsweise bei einer Unterbrechung der Energieversorgung für das Sekundärelement der Fall sein, beispielsweise bei Drücken des "Notaus"-Knopfes.

Gemäß einer weiter bevorzugten Weiterbildung der erfindungsgemäßen Werkzeugmaschine ist die Vorrichtung entlang wenigstens einer Bewegungsachse bewegbar vorgesehen, wobei deren Schneidwerkzeug für ein Ausführen der Schneidbewegung entlang der Hochachse eingerichtet ist. Damit lassen sich flächige Materialien einfach bearbeiten. Die Werkzeugmaschine kann beispielsweise fünf Bewegungsachsen aufweisen. Die Werkzeugmaschine ist typischerweise eine CNC (Computer Numeric Control)-Maschine.

Gemäß einer weiter bevorzugten Weiterbildung der erfindungsgemäßen Werkzeugmaschine ist eine Steuereinrichtung vorgesehen, mittels welcher sich der Hub, die Geschwindigkeit, die Beschleunigung und/oder die Schnittkraft der Schneidbewegung des Schneidwerkzeugs bedarfsabhängig einstellen lässt. Dies ist insbesondere ein Vorteil gegenüber der einleitend beschriebenen, aus dem Stand der Technik bekannten Lösung, bei welcher eine Kurbel verwendet wird. Denn die aus dem Stand der Technik bekannte Lösung weist einen festen Hub auf. Gemäß der beschriebenen Weiterbildung kann dagegen die Schneidbewegung des Schneidwerkzeugs beliebig angepasst werden. Dies kann beispielsweise bei der Verwendung unterschiedlicher Schneidwerkzeuge oder dem Schneiden verschiedener Materialien günstig sein.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: in einer Draufsicht eine Vorrichtung gemäß einem Ausführungsbeispiel der vorliegenden Erfindung;
- Fig. 2: in einer Draufsicht weitere Komponenten der Vorrichtung aus Fig. 1;
- Fig. 3: einen Schnitt A-A aus Fig. 2, welcher gegenüber Fig. 2 weitere Komponenten der Vorrichtung zeigt;
- Fig. 4: in einer Draufsicht ein Sekundärelement der Vorrichtung;
- Fig. 5: einen Schnitt B-B aus Fig. 4;
- Fig. 6: eine Messanordnung der Vorrichtung in einer Draufsicht;
- Fig. 7: eine Seitenansicht der Messanordnung; und
- Fig. 8: eine Rückansicht der Messanordnung.

In den Figuren bezeichnen gleiche Bezugszeichen gleiche oder funktionsgleiche Komponenten, soweit nichts Gegenteiliges angegeben ist.

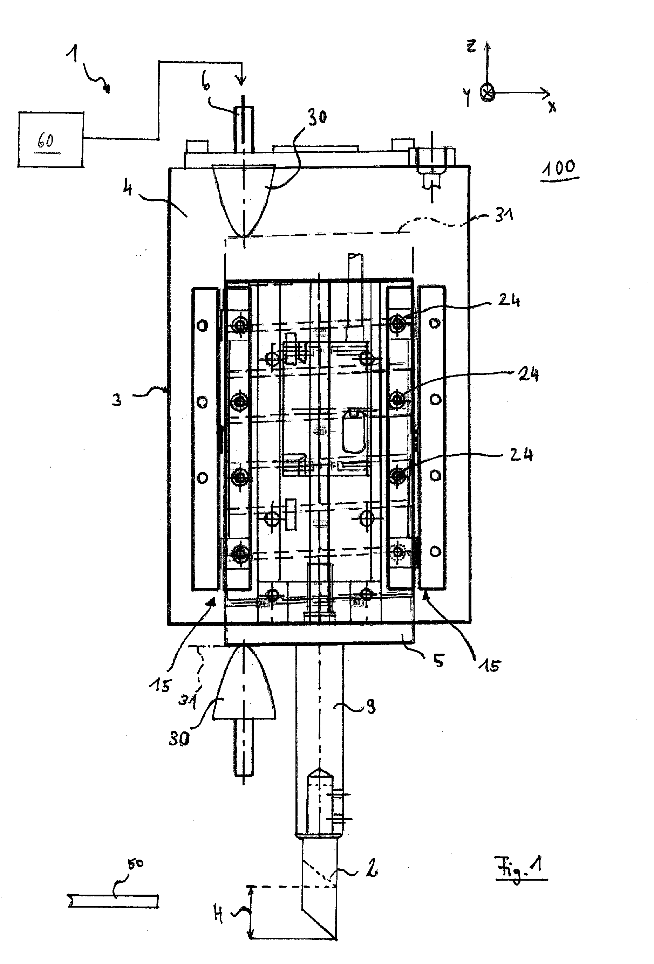

Fig. 1 zeigt in einer Draufsicht eine Vorrichtung 1 zum Schneiden gemäß einem Ausführungsbeispiel der vorliegenden Erfindung.

In Zusammenhang mit den Fig. 1 bis 3 ist zu beachten, dass hier der Übersichtlichkeit halber jeweils verschiedene Komponenten der Vorrichtung 1 nicht dargestellt sind und sich die gesamte Vorrichtung 1 erst aus einer Zusammenschau der Fig. 1 bis 3 ergibt.

Die Vorrichtung 1 ist vorzugsweise in eine nicht im Detail dargestellte Werkzeugmaschine 100 eingebaut. Die Vorrichtung 1 ist vorzugsweise in einem Koordinatensystem x, y, z bewegbar, wobei x die Längsachse, y die Querachse und z die Hochachse bezeichnet. Dafür ist die Werkzeugmaschine 100 mit beispielsweise fünf Bewegungsachsen ausgestattet.

Die Vorrichtung 1 weist ein Schneidwerkzeug 2 zum mechanischen Schneiden von Material, beispielsweise einer Kunststoffplatte 50, welches sich im Wesentlichen in der xy-Ebene erstreckt.

Die Vorrichtung 1 weist ferner einen Linearmotor 3 auf. Der Linearmotor 3 ist zum Bewegen des Schneidwerkzeugs 2 in gerader Linie beispielsweise entlang der z-Achse ausgebildet, wobei das Schneidwerkzeug einen Hub H ausführt.

Der Linearmotor 3 setzt sich aus einem Primärelement 4 und einem Sekundärelement 5 zusammen. Das Sekundärelement 5 ist entlang der z-Achse relativ zu dem Primärelement 4 beweglich vorgesehen. Das Sekundärelement 5 ist in Fig. 1 der besseren

Übersichtlichkeit halber durchsichtig und gestrichelt dargestellt.

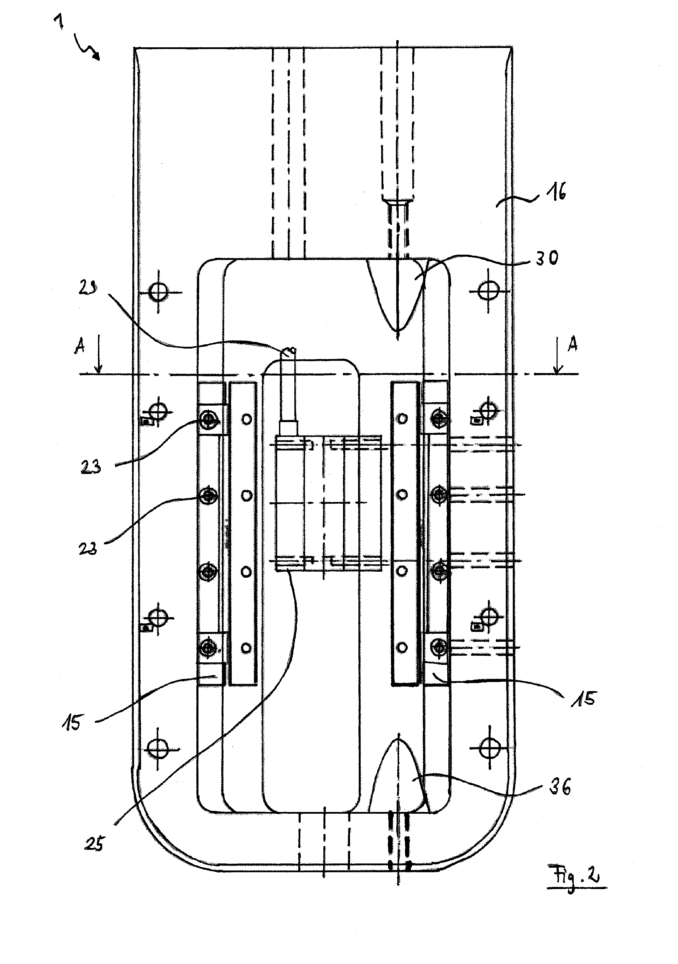

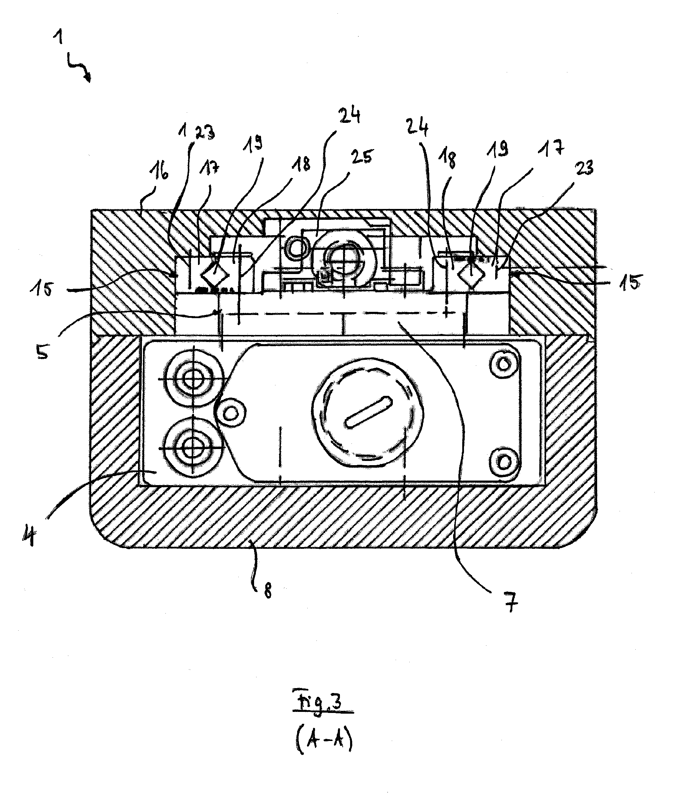

Das Primärelement 4 weist in Fig. 1 nicht dargestellte Wicklungen auf, welche über einen Anschluss 6 mit Strom versorgt und von einer Steuereinrichtung 60 der Werkzeugmaschine 100 angesteuert werden. Die Wicklungen des Primärelements 4 erzeugen ein elektromagnetische Feld, welches auf das Sekundärelement 5 wirkt. Das Primärelement 4 ist fest mit einem Gehäuseteil 8 verbunden. Dies ist in Fig. 3 zu sehen, welche einen Schnitt A-A aus Fig. 2 zeigt.

Das Schneidwerkzeug 2 kann mittels einer Halterung 9 insbesondere lösbar an dem Sekundärelement 5 befestigt ist. Gemäß dem vorliegenden Ausführungsbeispiel ist die Halterung 9 als ein Schaft ausgebildet.

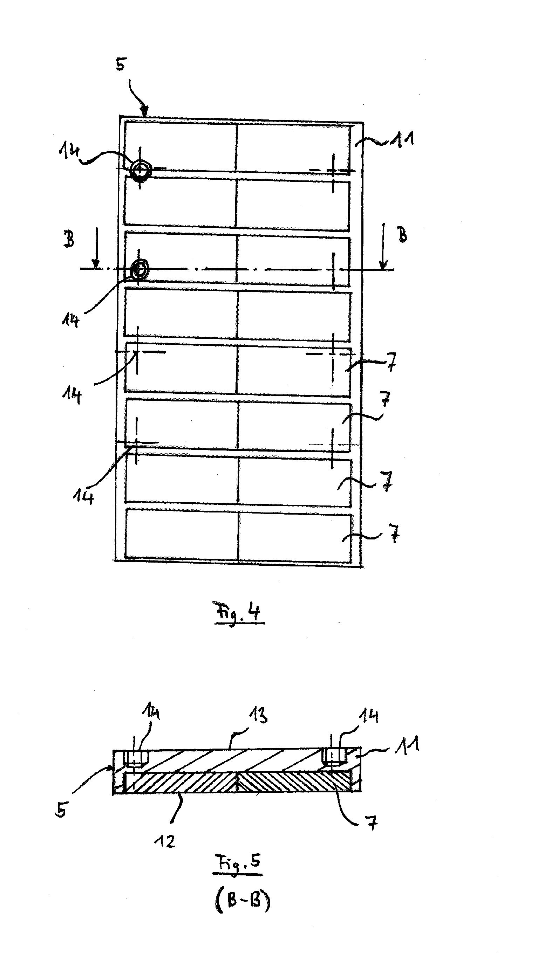

Wie Fig. 4 zu entnehmen, welche eine Draufsicht auf das Sekundärelement 5 zeigt, weist dieses eine Vielzahl von Permanentmagneten 7 auf. Die Permanentmagneten 7 sind, wie in Fig. 5 zu erkennen, welche einen Schnitt B-B aus Fig. 4 zeigt, in ein Trägerteil 11 an dessen Vorderseite 12 eingegossen. An der Rückseite 13, den Permanentmagneten 7 im Wesentlichen gegenüberliegend sind in dem Trägerteil Gewindebohrungen 14 vorgesehen.

Das Sekundärelement 5 ist mittels zweier Linearführungen 15 an einem Gehäuseteil 16 der Vorrichtung 1 beispielsweise entlang der Z-Achse beweglich angebracht, wie in Fig. 2 dargestellt, welche weitere Komponenten der Vorrichtung 1 in einer Draufsicht zeigt. Es könnten auch nur eine oder auch mehr als zwei Linearführungen 15 vorgesehen sein.

Jede der Linearführungen 15 weist vorzugsweise zwei Schienen 17, 18 auf, zwischen welchen Wälzkörper 19 angeordnet sind. Die Schiene 17 der Linearführung 15 ist fest mit dem Gehäuseteil 16, beispielsweise mittels Schrauben 23, verbunden, wie in den Fig. 2 und 3 zu sehen. Die Schiene 18 der Linearführung 15 ist fest mit dem Sekundärelement 5, beispielsweise mittels Schrauben 24, s. Fig. 1 und 3, verbunden. Die Schrauben 24 greifen dabei in die Gewindebohrungen 14 in dem Trägerteil 11 des Sekundärelements 5 ein, s. Fig. 5.

Die Gehäuseteile 8 und 16 bilden zusammen eine Einhausung, welche insbesondere das Primärelement 4 und das Sekundärelement 5 umgreift.

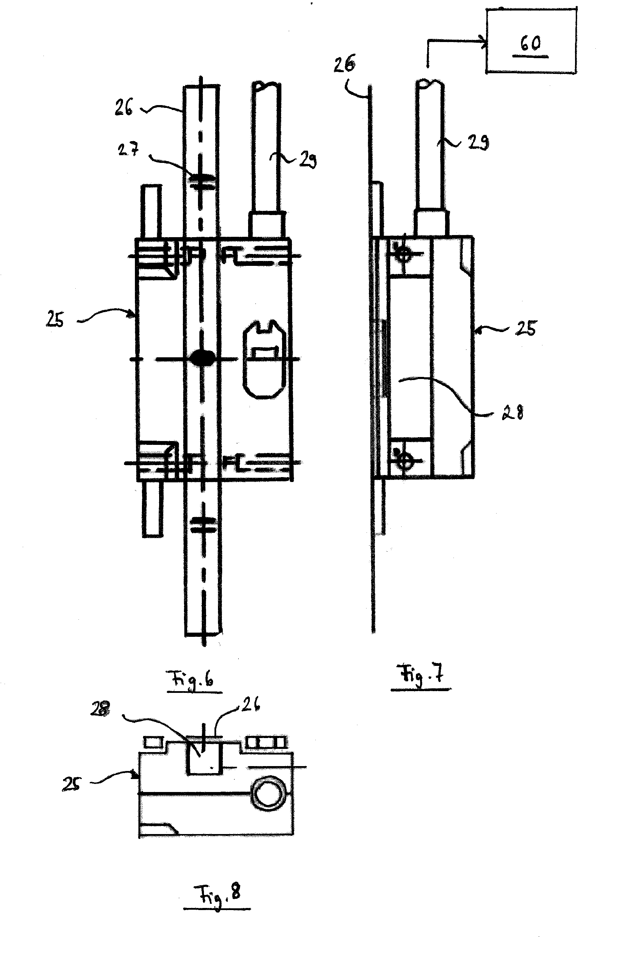

Die Vorrichtung 1 weist ferner eine Messanordnung 25, s. Fig. 2 und 3, auf, mittels welcher die Position des Sekundärelements 5 relativ zu dem Primärelement 4 gemessen werden kann. Dazu weist die Messanordnung 25, welche in den Fig. 6 bis 8 näher dargestellt ist, einen Messstreifen 26 auf, welcher mit optischen Markierungen 27 versehen ist. Die optischen Markierungen 27 können von einem Messaufnehmer 28 der Messanordnung 25 abgetastet werden, welcher fest an dem Gehäuseteil 16 angebracht ist. Über eine Signalleitung 29 werden die Messsignale, welche von der Messanordnung 25 erzeugt werden, der schematisch dargestellten Steuereinrichtung 60 zugeführt, s. Fig. 7.

Die Steuereinrichtung 60 ist vorzugsweise als programmierbare Steuereinrichtung ausgebildet. Mittels dieser lässt sich der Hub, die Geschwindigkeit, die Beschleunigung und/oder die Schnittkraft der Schneidbewegung bedarfsabhängig einstellen. Wird also beispielsweise das Schneidwerkzeug 2 gegen ein anderes Schneidwerkzeug ausgetauscht, so kann beispielsweise die Schnittkraft, welche von dem Linearmotor 3 auf das Schneidwerkzeug 2 ausgeübt wird, vergrößert oder verringert werden. Dies kann beispielsweise automatisch oder durch Einstellung einer Bedienerperson erfolgen. Ferner kann beispielsweise bei einem Wechsel von einem dünneren, zu schneidenden Material auf ein dickeres, zu schneidendes Material der Hub H des Schneidwerkzeugs 2 mittels der Steuereinrichtung 60 eingestellt werden.

Um für ein kontrolliertes Abbremsen des Sekundärelements 5 des Linearmotors 3 in dem Fall zu sorgen, dass beispielsweise plötzlich die Stromversorgung des Linearmotors 3 unterbrochen wird, insbesondere bei "Notaus", oder die Steuereinrichtung 60 ausfällt, weist die Vorrichtung 1 mehrere Puffer 30, insbesondere Parabelpuffer, auf, wie in den Fig. 1 und 2 gezeigt. Die Parabelpuffer 30 sind entlang der z-Achse gegenüberliegend an dem Gehäuseteil 16 befestigt und sind dazu eingerichtet, auf das Sekundärelement 5 dämpfend zu wirken, wenn sich dieses über seine vordefinierten Endlagen 31 hinaus bewegt.

Obwohl die vorliegende Erfindung anhand bevorzugter Ausführungsbeispiele vorliegend beschrieben wurde, ist sie darauf nicht beschränkt, sondern kann auf vielfältige Art und Weise modifiziert werden. Insbesondere sind die vorliegend für die erfindungsgemäße Vorrichtung beschriebenen Ausführungsbeispiele und Weiterbildungen auf die erfindungsgemäße Werkzeugmaschine und das erfindungsgemäße Verfahren entsprechend anwendbar, und umgekehrt. Ferner schließt vorliegend "ein" keine Mehrzahl aus.

### BEZUGSZEICHENLISTE

- 1: Vorrichtung
- 2: Schneidwerkzeug
- 3: Linearmotor
- 4: Primärelement
- 5: Sekundärelement
- 6: Anschluss
- 7: Permanentmagnet
- 8: Gehäuseteil
- 9: Halterung
- 11: Trägerteil
- 12: Vorderseite
- 13: Rückseite
- 14: Gewindebohrung
- 15: Linearführung
- 16: Gehäuseteil
- 17: Schiene
- 18: Schiene
- 19: Wälzkörper
- 23: Schraube
- 24: Schraube
- 25: Messanordnung
- 26: Messstreifen
- 27: optische Markierung
- 28: Messaufnehmer
- 29: Signalleitung
- 30: Puffer
- 31: Endlagen
- 50: Material
- 60: Steuereinrichtung
- 100: Werkzeugmaschine
- x: Längsachse
- y: Querachse
- z: Hochachse
- H: Hub

## Patentansprüche

1. Vorrichtung (1) zum Schneiden, mit:
einem Schneidwerkzeug (2), welches zum mechanischen Schneiden von Material (50) ausgebildet ist; und
einem Linearmotor (3), mittels welchem das Schneidwerkzeug (2) zum Ausführen einer Schneidbewegung zum Schneiden des Materials (50) antreibbar ist.

2. Vorrichtung nach Anspruch 1,
**dadurch gekennzeichnet,**
**dass** der Linearmotor (3) ein stationäres Primärelement (4) und ein relativ zu diesem bewegliches Sekundärelement (5) aufweist, wobei das Scheidwerkzeug (2) direkt von dem Sekundärelement (5) angetrieben wird.

3. Vorrichtung nach Anspruch 2,
**dadurch gekennzeichnet,**
**dass** das Sekundärelement (5) eine Halterung (9) aufweist, an welcher das Schneidwerkzeug (2) lösbar befestigt ist.

4. Vorrichtung nach Anspruch 2 oder 3,
**dadurch gekennzeichnet,**
**dass** ein erstes Trägerteil (16) vorgesehen ist, an welchem das Sekundärelement (5) mittels einer Linearführung (15) beweglich befestigt ist.

5. Vorrichtung nach Anspruch 4,
**dadurch gekennzeichnet,**
**dass** das Sekundärteil (5) ein zweites Trägerteil (11) und wenigstens einen Permanentmagneten (7) aufweist, welcher in das zweite Trägerteil (11) vorderseitig (12) eingegossen ist, wobei das zweite Trägerteil (11) rückseitig (13) an der Linearführung (15) befestigt ist.

6. Vorrichtung nach wenigstens einem der Ansprüche 2 bis 5, **dadurch gekennzeichnet,**
**dass** wenigstens ein Puffer (30) als Endlagenbegrenzung für das Sekundärelement (5) vorgesehen ist.

7. Werkzeugmaschine (100), mit einer Vorrichtung (1) nach wenigstens einem der vorhergehenden Ansprüche.

8. Werkzeugmaschine nach Anspruch 7,
**dadurch gekennzeichnet,**
**dass** die Vorrichtung (1) entlang wenigstens einer Bewegungsachse (x,y,z) bewegbar vorgesehen ist, wobei deren Schneidwerkzeug (2) für ein Ausführen der Schneidbewegung entlang der Hochachse (z) eingerichtet ist.

9. Werkzeugmaschine nach 7 oder 8,
**dadurch gekennzeichnet,**
**dass** eine Steuereinrichtung (60) vorgesehen ist, mittels welcher sich der Hub (H), die Geschwindigkeit, die Beschleunigung und/oder die Schnittkraft der Schneidbewegung des Schneidwerkzeugs (2) bedarfsabhängig einstellen lässt.

10. Verfahren zum Steuern einer der Vorrichtung (1) nach einem der Ansprüche 1 bis 6, wobei der Hub (H), die Geschwindigkeit, die Beschleunigung und/oder die Schnittkraft der Schneidbewegung des Schneidwerkzeugs (2) bedarfsabhängig eingestellt wird.
